# EUROPEAN PATENT SPECIFICATION

(11) **EP 4 181 821 B1**
(45) Date of publication and mention of the grant of the patent: **05.06.2024**
(21) Application number: 21743182.4
(22) Date of filing: 14.07.2021
(51) Int. Cl.: A61C 13/083, A61C 13/12, C21D 9/00, F27D 5/00

(54) **MOUNTING DEVICE FOR AUTOMATED DENTAL PROSTHESES PROCESSING**
MONTAGEVORRICHTUNG ZUR AUTOMATISIERTEN ZAHNERSATZBEARBEITUNG
DISPOSITIF DE MONTAGE POUR LE TRAITEMENT AUTOMATIQUE DE PROTHÈSES DENTAIRES

(30) Priority: 14.07.2020 EP 20185726
(43) Date of publication of application: 24.05.2023
(73) Proprietor: Institut Straumann AG, 4002 Basel (CH)
(72) Inventor: VAN OPHUYSEN, Andreas, 4002 Basel (CH); MROHS, Benjamin, 4002 Basel (CH); MELZER, Simone, 4002 Basel (CH)
(74) Representative: Michalski Hüttermann & Partner Patentanwälte mbB
(86) International application number: PCT/EP2021/069604
(87) International publication number: WO 2022/013291

(56) References cited:
- CN-A- 110 002 855
- US-A1- 2009 311 650
- US-A1- 2017 128 174

## Description

The present invention relates to a mounting device adapted to be temporarily connectable ex-vivo to an unfinished dental prosthesis body in the course of dental prosthesis processing, wherein the mounting device at least comprises a lower base part and an upper connecting part, wherein the connecting part is adapted to be connectable to the void volume of the dental prosthesis body, wherein at least the connecting part comprises a porous material at least comprising a porous content of larger or equal to 15 volume-% and smaller or equal to 75 volume-% and a thermal conductivity at 800°C of larger or equal to 0.05 W/mK and smaller or equal to 0.75 W/mK. In addition, the present invention relates to a process for automated dental prosthesis processing and a mounting device system.

Based on the strict quality requirements and functionality expectations for dental prostheses it is still state of the art, that the overall production process is dominated by manual working steps. Advantageously, manual processing allows precise handling of difficult geometries and challenging materials and, simultaneously, provides an in-process control, assuring that the process step result matches the desired outcome. Nevertheless, also the drawbacks of manual processing steps are obvious, wherein especially the associated labor costs and the non-uniform "individual" outcome have to be mentioned. Therefore, in order to overcome the drawbacks in the last decades several attempts have emerged in dental industries, targeted to increase the automated share in processing. Inter alia automated CNC controlled milling or 3D-printing of crown structures are some of the tools, which have successfully been implemented. With the aim of assuring the same or even higher quality standards in processing it is mandatory not only to replace manually by machined performed steps, but also to adapt the side-conditions in processing, in order to fully support and exploit the advantages of the processing capabilities.

Several attempts to improve the accuracy in the handling of a dental prosthesis in processing can be found in the patent literature.

US 2008 008 982 A1, for instance, discloses an apparatus for holding a dental prosthesis during preparation of the dental prosthesis, the apparatus comprising: at least one base, said at least one base having an upper surface, at least one pin, said at least one pin comprising a first end and a second end, said at least one pin further comprising a flared portion at said first end. said first end extending beyond said upper surface of said at least one base, and said second end extending through and into said upper surface of said base.

Another patent document, US 2012 058 448 A1, teaches a prosthesis mounting device that can be mounted on a mini dental implant for the purpose of mounting a dental prosthesis wherein the prosthesis mounting device comprises a housing, the housing comprising a peripheral wall having a capping at one end and a circular base with an opening at the other end, with the continuous peripheral wall defining an axial recess having a roof at the capping and an opening at the circular base; and said circular base is intended to rest on the platform of the collar of a mini dental implant with said circular base extending a small distance circumferentially beyond the collar in the form of overhang when the axial recess is mounted on a mini dental implant.

Furthermore, US 2006 090 361 A1 describes a production method of three-dimensional shape data of a part other than an engaging portion by a three-dimensional measuring device, the engaging portion has an engaging part in a cross sectional shape other than a rotary body and is projected and/or recessed on a jawbone side, a measured object mounting tool comprises a cylindrical part, a mounting part and a placing part, the mounting part positions a prolonged line of an axis of the cylindrical part in the engaging part, the placing part aligns a pre-specified direction of the mounting part with a specified providing direction of the placing table, the center axis of the cylindrical part is aligned with Z axis, and the model of the dental prosthesis is rotated around Z axis on the basis of the specified providing direction of the placing table.

US 2009/311650 describes a porous self-supporting support consisting of cured gypsum, for preparing a dental ceramic by immersion in an oxide-ceramic suspension/dispersion.

Nevertheless, besides the already existing solutions in the field of dental prosthesis processing there still exists the need for further solutions, being able to provide a better and more efficient handling of aesthetic dental prostheses during processing.

Therefore, it is the task of the invention at hand to overcome, at least in part, the drawbacks of the state of the art. Especially, it is a task of the invention to provide a reproducible manufacturing process with improved handling of prostheses to especially yield evenly coated dental prosthesis surfaces.

The above mentioned task is solved by a mounting device comprising the features according to the independent claim 1. In addition, the task is further solved by a process and a mounting device system according to the features of the independent claims 12 and 10, respectively. Preferred embodiments of the invention are also defined by the features of the dependent claims, by features disclosed in the description and in the figures, wherein a feature aggregation of separated parts is within the scope of the invention, unless explicitly excluded.

It is within the scope of the present invention to disclose a mounting device adapted to be temporarily connectable ex-vivo to an unfinished dental prosthesis body in the course of dental prosthesis processing, wherein the mounting device at least comprises a lower base part and an upper connecting part, wherein the connecting part is adapted to be connectable to the void volume of the dental prosthesis body, wherein at least the connecting part comprises a porous material at least comprising a porous content of larger or equal to 15 volume-% and smaller or equal to 75 volume-% and a thermal conductivity at 800°C of larger or equal to 0.05 W/mK and smaller or equal to 0.75 W/mK.

Surprisingly, it has been found, that above defined mounting device is able to improve the handling and the processability of dental prostheses in the course of manufacturing. The benefits are especially visible in processing steps, wherein a further coating or glazing is, either manually or automatically, applied onto the prosthesis body and the resulting coated body is subjected to a further heat or firing treatment. Without being bound by the theory it is assumed, that the special porousness of the mounting device in combination with the defined thermal properties results in an improved coating outcome, wherein any "excess" of applied coating material is absorbed within the pores of the mounting device. Therefore, excess material does not accumulate at the lower edges of the dental prosthesis and solidifies in the further course of the processing, resulting in out of spec material, which has to be manually corrected. Instead, the surplus coating material is actively removed from the device by capillary forces and an even prosthesis coating thickness can be achieved in cases, wherein for safety reasons more material is applied. Furthermore, based on the thermal properties a synergistic effect is achieved, because the prosthesis does not have to be separated from the device in cases, wherein the additional coating is fixed onto the prosthesis surface by a consecutive firing step. Based on the inventively claimed thermal properties the dimensions of the mounting device do not alter even at high temperatures, resulting in a fixed and mechanically stable connection between the mounting device and the prosthesis during the coating and thermal treatment steps. The fixed geometry between prosthesis and mounting device assures a reproducible coating and firing outcome, wherein also an even temperature profile in the prosthesis is achieved. In consequence, prostheses can be manufactured, either manually or machine controlled, wherein further coating steps including the application of a glazing, result in a better, homogeneous coating and firing outcome, compared to state of the art solutions.

The mounting device is adapted to be temporarily connectable ex-vivo to an unfinished dental prosthesis body in the course of dental prosthesis processing. The disclosed mounting device is suitable for ex-vivo use, only. Therefore, the mounting device is unsuitable for being inserted into a patient's mouth. Usually mounting devices are used for holding or fixing dental prostheses in the course of prostheses production, in order to improve the handling properties and to protect the prosthesis body itself from direct physical contact. The prosthesis body is unfinished in a sense, that additional process steps are necessary in order to achieve a finished prosthesis, able for in vivo use. The additional process steps may include the application of further surface coating layers, polishing steps, glazing steps, coloring steps and so on. The device is especially suited for unfinished prostheses, wherein the further processing includes a coating and a thermal treatment step. Within such processing sequence the mounting device comprises synergistic handling and processing effects.

The mounting device at least comprises a lower base part and an upper connecting part. The mounting device at least comprises two functional parts, wherein the upper part of the mounting device is shaped or designed in order to connect or fit to the prosthesis body. Therefore, the connecting part comprises a special contour, enabling the "right" mechanical interaction with the prosthesis. The lower base part is in physical contact to the connecting part and is designed to allow a proper handling of the overall device, e.g. by providing a flat base. Furthermore, the lower base part may provide further features, allowing a better handling of the prosthesis, attached to the device. Possible features may be handles or grips, holes or connecting parts for attaching further components. The upper and lower part may be formed from different materials and attached afterwards or may be manufactured from a single material block. Preferably both parts differ in their purpose, only, and comprise or consist of the same material.

The connecting part is adapted to be connectable to the void volume of the dental prosthesis body. The upper connecting part is individually formed in order to securely attach and hold the prosthesis during the processing steps. Therefore, the upper connecting part can mimic the internal inner contour of the prosthesis and allow for a tight fit between mounting device and prosthesis. In addition, it is possible to form the connecting part in a way, that a single connecting part type allows for the attachment of several differently shaped prostheses, e.g. by connecting to certain inner contour parts common for all of the prosthesis. The shape of the connecting part is for instance suitable for this purpose in cases, wherein after attachment of the prosthesis, the prosthesis is not detachable by gravity forces from the connecting part alone. The prosthesis void volume is formed by the inner prosthesis surface down to the lowest prosthesis part.

The connecting part comprises a porous material at least comprising a porous content of larger or equal to 15 volume-% and smaller or equal to 75 volume-%. For a reproducible and sufficient uptake of coating liquids, the above given range of pores in the material has been found favorable. Lower pore contents can be disadvantageous, because the possible volume uptake by the pores may be insufficient, resulting in uneven coating thicknesses especially at the lower edges of the prosthesis. Higher pore volumes can further be disadvantageous, because the mechanical stability of the mounting device can be too low. The porous content can further preferably be larger or equal to 25 volume-% and smaller or equal to 70 volume-%, further preferred larger or equal to 30 volume-% and smaller or equal to 60 volume-%.The pore volume of the mounting device material can be assessed by mercury porosimetry as for instance described in DIN ISO 15901-1:2016.

The connecting part comprises a thermal conductivity at 800°C of larger or equal to 0.05 W/mK and smaller or equal to 0.75 W/mK. The thermal conductivity of a material is a measure of its ability to conduct heat. For the mounting device above given conductivity range has been found advantageous. The overall device dimensions remain constant, even at high temperatures and especially in the firing step this range can assure a homogeneous temperature distribution in the prosthesis without interference by the mounting device itself. Therefore, based on the low energy transfer to the device, especially firing steps can be performed homogeneously and result in a very defined temperature of the prosthesis body. Higher thermal conductivities can be disadvantageous, because the firing temperature of the prosthesis body may be inhomogeneous. The thermal conductivity of the device material can for instance be assessed according to DIN EN 993-15:2005.

Furthermore, in a preferred embodiment the mounting device comprises porous material, wherein the porous material comprises SiO₂ and Al₂O₃, wherein the SiO₂-content is larger or equal to 10 weight-% and smaller or equal to 50 weight-% and the Al₂O₃-content is larger or equal to 10 weight-% and smaller or equal to 90 weight-%, wherein the sum of the SiO₂-content and the Al₂O₃-content is larger or equal to 50 weight-%. The mentioned material composition has been found useful for mechanical and thermal stabilization of prostheses during processing and, based on the liquid adsorption properties, also suitable for interaction with most coating materials used for alteration of dental prosthesis surfaces. Thus, the material is very suitable for assuring homogeneous coating even at the lower prosthesis parts being in contact with the mounting device. It is assumed that the combination of Si and Al in the above given range provides the "right" hydrophobicity/hydrophilicity in order to uptake excess coating compositions even in difficult geometries, for instance comprising larger gaps between the supporting part of the device and the prosthesis.

Within a preferred aspect of the mounting device the loss of ignition of the porous material can be larger or equal to 0 weight-% and smaller or equal to 8 weight-%. For a reproducible firing step after application of a coating to the prosthesis surface it has been found suitable, that the porous material comprises a fairly low loss of ignition. The above given range is able to assure that the physical contact between the prosthesis and the device is keep constant even at very harsh firing conditions. No or only very low additional pressure is generated upon heating in the void volume between device and inner prosthesis surface, resulting in a constant attachment of the prosthesis during the firing step.

In a further preferred aspect of the mounting device the density of the porous material can be larger or equal to 250 kg/m³ and smaller or equal to 1300 kg/m³. For a better handling of the device and for an increased mechanical and thermal stability it has been found useful, to employ material in above given density range. Lower densities may increase the risk of an insufficient homogeneous firing step or mechanical damaging of the device material and higher densities may unnecessarily increase the device weight. Further preferred densities can be larger or equal to 250 kg/m³ and smaller or equal to 800 kg/m³ and, furthermore, can be larger or equal to 300 kg/m³ and smaller or equal to 700 kg/m³.

In another preferred characteristic of the mounting device the connecting part and the base part may comprise the same porous material. For a homogeneous and reproducible firing step, wherein the prosthesis is still attached to the device during the firing, it has been found favorable, that both device parts comprise, at least to a certain extent, the same porous material composition. Such setup may provide homogeneous thermal device properties and here especially a constant heat capacity, during the thermal treatment. Therefore, better firing results for the prosthesis can be obtained. Preferably, the different parts may comprise more than 50 weight-%, preferably more than 75 weight-% and preferred more than 90 weight-% of the same porous material.

Within a preferred aspect of the mounting device the lower base part may comprise an orientation marker. For an automatized processing it has been found useful, that the lower base part either comprises a non-symmetrical shape or that the lower base part comprises a marker, wherein the marker is able to provide information with respect to the alignment of the prosthesis on the device. The alignment information may for instance include information about prosthesis back or front or left or right orientation and prosthesis identity. The maker may, for instance, be a color or bar code or a RFID-device. In addition or alternatively, the device body itself may comprise the marker, e.g. by alteration of the device body shape. A device, wherein the device body is asymmetrically shaped is included in the figures.

In another preferred embodiment of the mounting device the connecting part and the base part may consist of the same porous material. In order to achieve a very homogeneous firing step it has been found useful, that the different device parts are made from the same material. This embodiment may provide very reliable and reproducible firing results of evenly coated prostheses.

Within a preferred embodiment of the mounting device the connecting part and the base part may comprise at least one interconnecting channel from the bottom to the top of the mounting device. The two device parts may comprise a channel structure extending from the bottom to the top of the device. The channel dimension may be sufficient, in order to allow gases to pass from the bottom to the top of the device. The interconnecting channel may allow to pass gases from the sealed inner void between prosthesis inner surface and connecting part to the outside. A pressure build-up during the firing process is avoided and, consequently, the mechanical connection between device and prosthesis maintained during firing.

In a further preferred characteristic of the mounting device the circumferential outer edge of the supporting part may comprise an angle of larger or equal to -30° and smaller or equal to 35° with respect to a flat surface. The above defined angle range has been found very suitable for assuring a fast and efficient reduction of excess coating material applied to the prosthesis surface. The angled embodiment of the outer edge enables a closer contact between the device and the prosthesis surface and eases the uptake of even very viscous coating liquids.

In a preferred characteristics the mounting device the mounting device is adapted to be temporarily connectable ex-vivo to an unfinished dental prosthesis body in the course of dental prosthesis processing, wherein the mounting device at least comprises a lower base part and an upper connecting part, wherein the connecting part is adapted to be connectable to the void volume of the dental prosthesis body, wherein at least the connecting part comprises a porous material at least comprising a density of the porous material of larger or equal to 250 kg/m³ and smaller or equal to 1300 kg/m³ and a thermal conductivity at 800°C of larger or equal to 0.05 W/mK and smaller or equal to 0.75 W/mK.

A mounting device system is further within the scope of the invention at hand, wherein the system comprises the inventive mounting device and a prosthesis. The connecting part of the mounting device may comprise an inner attachment part and an outer supporting part, wherein the inner attachment part is adapted to extend into the void volume of the dental prosthesis body and the outer supporting part is adapted to match the lower circumferential contour line of the dental prosthesis body, wherein the length difference between the lower contour line of the dental prosthesis body and the outer supporting part of the connecting part is smaller or equal to 10% with respect to the length of the dental prosthesis body lower circumferential contour line. It has been found advantageous, that the upper attachment part comprises at least two different functional segments. On the one hand, a part assuring the proper attachment of the prosthesis by inserting and fixing the attachment part into the inner void volume of the prosthesis. On the other hand, a segment not intended to be inserted in the inner void volume of the prosthesis but supporting the lower prosthesis part. The prosthesis rests on the latter and is in close contact to the surface of that part. Therefore, the mechanical fixation is provided by the attachment and the support of the lower circumferential prosthesis part is provided by the supporting part. The supporting part may for instance extent from the attachment part to the outer surface of the prosthesis. In addition, it is possible that the supporting part extends beyond the prosthesis surface. I.e. the supporting part may be larger than the prosthesis wall thickness. In order to assure a proper uptake of any coating material applied to the prosthesis surface the supporting part should be in close contact to the lower contour line of the prosthesis. The close contact can be assured in cases, wherein the lower contour line of the dental prosthesis body and the outer supporting part of the connecting part are of similar dimension, i.e. in above given length range. Furthermore, it can be advantageous that the contour line of the supporting part is closely matching and in direct physical contact to the lower contour line of the prosthesis body. In such cases additionally or unintentionally applied liquid can be guided to the porous device body and does not accumulate on the lower prosthesis parts. Based on the defined porosity of the mounting device it is not necessary, that on each and every lower segment of the prosthesis body a direct physical contact to the mounting device is established. It was found that liquid can also securely be absorbed by the mounting device in cases, wherein small gaps between prosthesis and mounting device are present.

In a preferred embodiment of the system the attachment part surface of the mounting device can be contoured to contact, at least in part, the inner surface of the dental prosthesis body, wherein the void volume between the inner attachment part surface and the dental prosthesis body inner surface after attachment of the mounting device to the dental prosthesis body is smaller or equal to 10 volume-% with respect to the void volume of the dental prosthesis body. In order to assure a sufficient mechanical stabilization and fit of the prosthesis by the attachment part it is beneficial, that the attachment part surface is contoured to match the prosthesis body inner surface. The physical control of the prosthesis and the restriction of movements between prosthesis and attachment part in the course of a firing treatment at high temperatures can be limited in cases, wherein after insertion of the attachment part a small void volume remains, only. Larger void volumes can be disadvantageous, because the mechanical connection forces and/or the homogeneous thermal properties of the prosthesis and device system can be reduced. The remaining void volume can be mathematically calculated based on device geometry and the shape of the inner prosthesis surface.

It is further within the scope of the invention to disclose a process for an automated processing of a dental prosthesis, wherein the dental prosthesis is at least temporarily brought in contact with the inventive mounting device in one of the process steps during processing. In principle, the inventive device is able to improve the quality of manually or automatically processed prostheses, because in each case the amount of out of spec coated material is reduced. Nevertheless, the inventive device can especially be used in the course of an automatic coating process, wherein the coating is, for instance, applied via a spray robot. In such cases, the overall process speed and the applied coating amount can be increased, avoiding an accumulation of the coating material at the lower prosthesis parts. Therefore, the process is very robust and the processing costs can, compared to state-of-the-art-processes, be lower. Additional process advantages are also mentioned in the background of the inventive device.

Within a preferred embodiment of the process the process can be a coating process. As explained above, the disclosed device is especially useful within coating processes, wherein additional liquid material is applied on the prosthesis surface. In such cases an inhomogeneous coating result can be avoided by the uptake of excess material.

In another preferred aspect of the process the process can be a glazing process. The inventive device can lead to further advantages in cases, wherein the coating process is a glazing process. Inhomogeneous glazing is very difficult to correct after the firing step. In addition, based on the optical properties of the glaze composition it is very difficult to detect inhomogeneous glazings. Therefore, also for very transparent coating compositions the inventive process and the inventive device comprises further advantages.

In a further preferred embodiment of the process the dental prosthesis can be a prosthesis selected from the group consisting of crowns, bridges, multi-unit-bridges or combinations thereof. The disclosed process is especially suited in cases, wherein difficult geometries have to be coated. Either the processes according to the state of the art apply very low amounts of coating liquids in order to avoid the accumulation of any excess amounts or larger and safe amounts are applied, resulting in the above describe prosthesis defects after firing. Both alternatives can be avoided for such geometries by the described process and the described device, resulting in a reproducible and sufficient coating even for very difficult to coat geometries.

The present invention will be further described with reference to the following figures without wishing to be limited by them.
- FIG. 1: shows a schematic representation of the different parts of the inventive mounting device;
- FIG. 2: shows a representation of the inventive mounting device;
- FIG. 3: shows a combination of a prosthesis and the inventive mounting device.

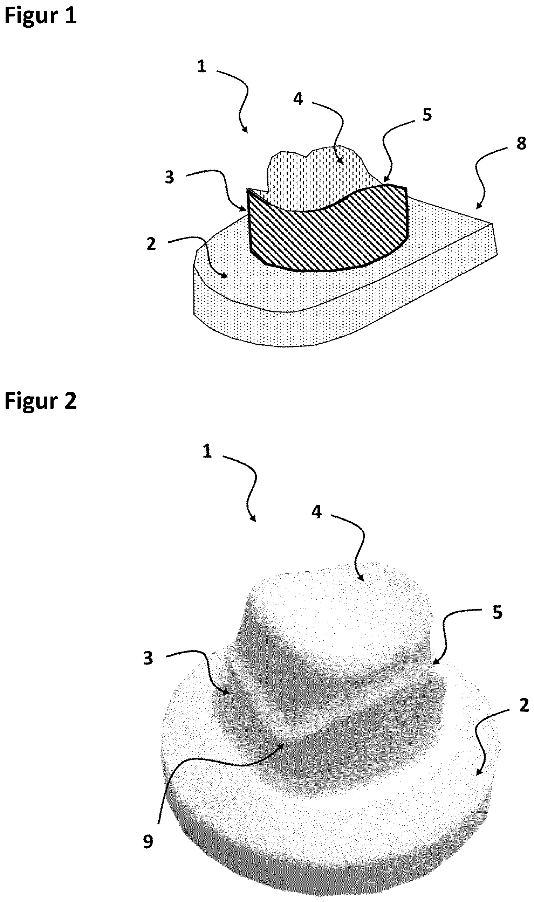

In figure 1 a possible embodiment of the inventive mounting device (1) is depicted. The mounting device (1) comprises at least a lower base part (2) and an upper attachment part (3). The upper attachment part (3) may further comprise different structures, like an inner attachment part (4) and an outer supporting part (5). Therefore, the inner attachment part (4) and the outer supporting part (5) can be regarded as parts of the upper attachment part (3), because also these structures are involved in the attachment of the prosthesis (6) to the mounting device (1). In consequence, a two part set-up is realized including means for supporting the mounting device (1), i.e. the lower base part (2), and means for attaching a prosthesis (6) (not shown), i.e. upper attachment part (3) with inner attachment part (4) and outer supporting part (5). The overall mounting device (1) may comprise or consist the same material. The mounting device (1) may further comprise an orientation marker (8), wherein the marker is able to indicate or distinguish the direction of the prosthesis (9) on the mounting device (1) or the orientation of the mounting device (1) at all.

Figure 2 shows the inventive mounting device (1), wherein the mounting device (1) also comprises a lower base part (2) and an upper attachment part (3), wherein in upper attachment part (3) also comprises the inner attachment part (4) and the outer supporting part (5). In addition, also the supporting part circumferential outer edge (9) is shown. The inner attachment part (4) is shaped in order that this part can be inserted into the inner void volume of a prosthesis (6) (not shown). The void volume of the prosthesis (6) is filled by the inner attachment part (4) after attaching the prosthesis (6) to the mounting device (1). The prosthesis (6) rests, at least in part, on the outer supporting part (5). Within this embodiment no orientation marker (8) is present on the mounting device (1).

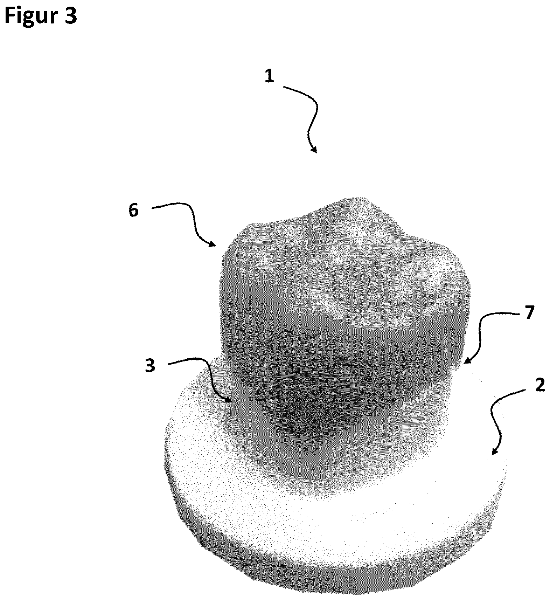

Figure 3 shows the inventive mounting device (1) after attachment of a dental prosthesis (6) to the mounting device (1). The dental prosthesis (6) is a crown in this case. It can be seen that the prosthesis (6) is attached to the mounting device (1) via the upper attachment part (3), wherein the inner void volume of the crown is at least in part filled by the inner attachment part (4). The dental prosthesis body lower circumferential contour line (7) rests, at least in part, on the outer supporting part (5) of the upper attachment part (3). Extra applied coating material is able to be guided to the upper attachment part (3) and, therefore, an accumulation of coating material at the dental prosthesis body lower circumferential contour line (7) is avoided. Automatic coating routines can be used. In addition, excess material can be applied intentionally in order to assure a sufficient amount of coating liquid without the need to manually remove the excess material after a firing step.

### List of reference numerals and signs

- 1: mounting device
- 2: lower base part
- 3: upper connecting part
- 4: inner attachment part
- 5: outer supporting part
- 6: dental prosthesis body
- 7: dental prosthesis body lower circumferential contour line
- 8: orientation marker
- 9: supporting part circumferential outer edge

## Claims

1. A mounting device (1) adapted to be temporarily connectable ex-vivo to an unfinished dental prosthesis body (6) in the course of dental prosthesis processing,
wherein the mounting device (1) at least comprises a lower base part (2) and an upper connecting part (3, 4, 5), wherein the connecting part (3, 4, 5) is adapted to be connectable to the void volume of the dental prosthesis body (6), wherein at least the connecting part (3, 4, 5) comprises a porous material,
**characterized in that** said porous material at least comprises a porous content of larger or equal to 15 volume-% and smaller or equal to 75 volume-% and a thermal conductivity at 800°C of larger or equal to 0.05 W/mK and smaller or equal to 0.75 W/mK.

2. The mounting device according to claim 1, wherein the porous material comprises SiO₂ and Al₂O₃, wherein the SiO₂-content is larger or equal to 10 weight-% and smaller or equal to 50 weight-% and the Al₂O₃-content is larger or equal to 10 weight-% and smaller or equal to 90 weight-%, wherein the sum of the SiO₂-content and the Al₂O₃-content is larger or equal to 50 weight-%.

3. The mounting device according to one of claims 1 to 2, wherein the loss of ignition of the porous material is larger or equal to 0 weight-% and smaller or equal to 8 weight-%.

4. The mounting device according to one of claims 1 to 3, wherein the density of the porous material is larger or equal to 250 kg/m³ and smaller or equal to 1300 kg/m³.

5. The mounting device according to one of claims 1 to 4, wherein the connecting part (3, 4, 5) and the base part (2) comprise the same porous material.

6. The mounting device according to one of claims 1 to 5, wherein the lower base part (2) comprises an orientation marker (8).

7. The mounting device according to one of claims 1 to 6, wherein the connecting part (3, 4, 5) and the base part (2) consists of the same porous material.

8. The mounting device according to one of claims 1 to 7, wherein the connecting part (3, 4, 5) and the base part (2) comprises at least one interconnecting channel from the bottom to the top of the mounting device (1).

9. The mounting device according to one of claims 1 to 8, wherein the circumferential outer edge (9) of the supporting part (5) comprises an angle of larger or equal to -30° and smaller or equal to 35° with respect to a flat surface.

10. Mounting device system comprising a mounting device according to claim 1 and a prosthesis, wherein the connecting part (3, 4, 5) comprises an inner attachment part (4) and an outer supporting part (5), wherein the inner attachment part (4) is adapted to extend into the void volume of the dental prosthesis body (6) and the outer supporting part (5) is adapted to match the lower circumferential contour line (7) of the dental prosthesis body (6), wherein the length difference between the lower contour line (7) of the dental prosthesis body (6) and the outer supporting part (5) of the connecting part (3, 4, 5) is smaller or equal to 10% with respect to the length of the dental prosthesis body lower circumferential contour line (7).

11. System according to claim 10, wherein the attachment part surface (4) is contoured to contact at least in part the inner surface of the dental prosthesis body (6), wherein the void volume between the inner attachment part (4) surface and the dental prosthesis body (6) inner surface after attachment of the mounting device (1) to the dental prosthesis body (6) is smaller or equal to 10 volume-% with respect to the void volume of the dental prosthesis body (6).

12. A process for an automated processing of a dental prosthesis, wherein the dental prosthesis (6) is at least temporarily brought in contact with a mounting device (1) according to one of claims 1-9 in a coating process.

13. Process according to claim 12, wherein the coating process is a glazing process.

14. Process according to one of claims 12 to 13, wherein the dental prosthesis is a prosthesis selected from the group consisting of crowns, bridges, multi-unit-bridges or combinations thereof.

## Patentansprüche

1. Haltevorrichtung (1), die dazu geeignet ist, im Verlauf einer Zahnersatzbearbeitung vorübergehend ex-vivo mit einem unfertigen Zahnersatzkörper (6) verbunden zu werden, wobei
die Haltevorrichtung (1) mindestens einen unteren Basisteil (2) und einen oberen Verbindungsteil (3, 4, 5) aufweist, wobei der Verbindungsteil (3, 4, 5) dazu eingerichtet ist, mit dem Hohlraumvolumen des Zahnersatzkörpers (6) verbunden zu werden, wobei mindestens der Verbindungsteil (3, 4, 5) ein poröses Material aufweist,
**dadurch gekennzeichnet, dass**
das poröse Material mindestens einen Porengehalt von größer oder gleich 15 Volumen-% und kleiner oder gleich 75 Volumen-% und eine Wärmeleitfähigkeit bei 800°C von größer oder gleich 0,05 W/mK und kleiner oder gleich 0,75 W/mK aufweist.

2. Haltevorrichtung nach Anspruch 1, wobei das poröse Material SiO₂ und Al₂O₃ aufweist, wobei der SiO₂-Gehalt größer oder gleich 10 Gew.-% und kleiner oder gleich 50 Gew.-% ist und der Al₂O₃-Gehalt größer oder gleich 10 Gew.-% und kleiner oder gleich 90 Gew.-% ist, wobei die Summe aus dem SiO₂-Gehalt und dem Al₂O₃-Gehalt größer oder gleich 50 Gew.-% ist.

3. Haltevorrichtung nach Anspruch 1 oder 2, wobei der Glühverlust des porösen Materials größer oder gleich 0 Gew.-% und kleiner oder gleich 8 Gew.-% ist.

4. Haltevorrichtung nach einem der Ansprüche 1 bis 3, wobei die Dichte des porösen Materials größer oder gleich 250 kg/m³ und kleiner oder gleich 1300 kg/m³ ist.

5. Haltevorrichtung nach einem der Ansprüche 1 bis 4, wobei der Verbindungsteil (3, 4, 5) und der Basisteil (2) das gleiche poröse Material aufweisen.

6. Haltevorrichtung nach einem der Ansprüche 1 bis 5, wobei der untere Basisteil (2) eine Ausrichtungsmarkierung (8) aufweist.

7. Haltevorrichtung nach einem der Ansprüche 1 bis 6, wobei der Verbindungsteil (3, 4, 5) und der Basisteil (2) aus dem gleichen porösen Material bestehen.

8. Haltevorrichtung nach einem der Ansprüche 1 bis 7, wobei der Verbindungsteil (3, 4, 5) und der Basisteil (2) mindestens einen Verbindungskanal von der Unterseite zur Oberseite der Haltevorrichtung (1) aufweisen.

9. Haltevorrichtung nach einem der Ansprüche 1 bis 8, wobei der Außenumfangsrand (9) eines Stützteils (5) einen Winkel von größer oder gleich -30° und kleiner oder gleich 35° in Bezug auf eine ebene Fläche aufweist.

10. Haltevorrichtungssystem mit einer Haltevorrichtung nach Anspruch 1 und einem Zahnersatzkörper, wobei der Verbindungsteil (3, 4, 5) einen inneren Befestigungsteil (4) und einen äußeren Stützteil (5) aufweist, wobei der innere Befestigungsteil (4) dazu eingerichtet ist, sich in das Hohlraumvolumen des Zahnersatzkörpers (6) zu erstrecken, und der äußere Stützteil (5) derart eingerichtet ist, dass er der unteren Umfangskonturlinie (7) des Zahnersatzkörpers (6) angepasst ist, wobei der Längenunterschied zwischen der unteren Konturlinie (7) des Zahnersatzkörpers (6) und dem äußeren Stützteil (5) des Verbindungsteils (3, 4, 5) kleiner oder gleich 10% in Bezug auf die Länge der unteren Umfangskonturlinie (7) des Zahnersatzkörpers ist.

11. System nach Anspruch 10, wobei die Oberfläche des Befestigungsteils (4) derart konturiert ist, dass sie zumindest teilweise mit der Innenfläche des Zahnersatzkörpers (6) in Kontakt steht, wobei das Hohlraumvolumen zwischen der Oberfläche des inneren Befestigungsteils (4) und der Innenfläche des Zahnersatzkörpers (6) nach dem Befestigen der Haltevorrichtung (1) am Zahnersatzkörper (6) kleiner oder gleich 10 Volumen-% in Bezug auf das Hohlraumvolumen des Zahnersatzkörpers (6) ist.

12. Verfahren zum automatisierten Bearbeiten eines Zahnersatzkörpers, wobei der Zahnersatzkörper (6) in einem Beschichtungsprozess zumindest zeitweise mit einer Haltevorrichtung (1) nach einem der Ansprüche 1 bis 9 in Kontakt gebracht wird.

13. Verfahren nach Anspruch 12, wobei der Beschichtungsprozess ein Glasierungsprozess ist.

14. Verfahren nach Anspruch 12 oder 13, wobei der Zahnersatzkörper ausgewählt ist aus der Gruppe bestehend aus Kronen, Brücken, mehrgliedrigen Brücken oder Kombinationen davon.

## Revendications

1. Dispositif de montage (1) adapté pour pouvoir être temporairement relié ex vivo à un corps de prothèse dentaire (6) non fini au cours du traitement de la prothèse dentaire,
dans lequel
le dispositif de montage (1) comprend au moins une partie de base inférieure (2) et une partie de liaison supérieure (3, 4, 5), dans lequel au moins la partie de liaison (3, 4, 5) est adaptée pour être reliée au volume de vide du corps de prothèse dentaire (6), dans lequel au moins la partie de liaison (3, 4, 5) comprend un matériau poreux **caractérisé en ce que** ledit matériau poreux comprend au moins un contenu poreux supérieur ou égal à 15 % en volume et inférieur ou égal à 75 % en volume et une conductivité thermique à 800 °C supérieure ou égale à 0,05 W/mK et inférieure ou égale à 0,75 W/mK.

2. Dispositif de montage selon la revendication 1, dans lequel le matériau poreux comprend SiO₂ et Al₂O₃, dans lequel la teneur en SiO₂ est supérieure ou égale à 10 % en masse et inférieure ou égale à 50 % en masse et la teneur en Al₂O₃ est supérieure ou égale à 10 % en masse et inférieure ou égale à 90 % en masse, dans lequel la somme de la teneur en SiO₂ et de la teneur en Al₂O₃ est supérieure ou égale à 50 % en masse.

3. Dispositif de montage selon l'une des revendications 1 à 2, dans lequel la perte au feu du matériau poreux est supérieure ou égale à 0 % en masse et inférieure ou égale à 8 % en masse.

4. Dispositif de montage selon l'une des revendications 1 à 3, dans lequel la masse volumique du matériau poreux est supérieure ou égale à 250 kg/m³ et inférieure ou égale à 1300 kg/m³.

5. Dispositif de montage selon l'une des revendications 1 à 4, dans lequel la partie de liaison (3, 4, 5) et la partie de base (2) comprennent le même matériau poreux.

6. Dispositif de montage selon l'une des revendications 1 à 5, dans lequel la partie de base inférieure (2) comprend un repère d'orientation (8).

7. Dispositif de montage selon l'une des revendications 1 à 6, dans lequel la partie de liaison (3, 4, 5) et la partie de base (2) sont constituées du même matériau poreux.

8. Dispositif de montage selon l'une des revendications 1 à 7, dans lequel la partie de liaison (3, 4, 5) et la partie de base (2) comprennent au moins un canal d'interconnexion entre le fond et le sommet du dispositif de montage (1).

9. Dispositif de montage selon l'une des revendications 1 à 8, dans lequel le bord externe de circonférence (9) de la partie de soutien (5) comprend un angle supérieur ou égal à -30° et inférieur ou égal à 35° par rapport à une surface plane.

10. Système de dispositif de montage comprenant un dispositif de montage selon la revendication 1 et une prothèse, dans lequel la partie de liaison (3, 4, 5) comprend une partie de fixation interne (4) et une partie de soutien externe (5), dans lequel la partie de fixation interne (4) est adaptée pour s'étendre dans le volume de vide du corps de prothèse dentaire (6) et la partie de soutien externe (5) est adaptée pour correspondre à la ligne de contour de circonférence inférieure (7) du corps de prothèse dentaire (6), dans lequel la différence de longueur entre la ligne de contour inférieure (7) du corps de prothèse dentaire (6) et la partie de soutien externe (5) de la partie de liaison (3, 4, 5) est inférieure ou égale à 10 % par rapport à la longueur de la ligne de contour de circonférence inférieure (7) du corps de prothèse dentaire.

11. Système selon la revendication 10, dans lequel la surface de la partie de fixation (4) a un contour pour lui permettre d'entrer en contact au moins en partie avec la surface interne du corps de prothèse dentaire (6), dans lequel le volume de vide entre la surface de la partie de fixation interne (4) et la surface interne du corps de prothèse dentaire (6) après la fixation du dispositif de montage (1) au corps de prothèse dentaire (6) est inférieur ou égal à 10 % en volume par rapport au volume de vide du corps de prothèse dentaire (6).

12. Procédé de traitement automatisé d'une prothèse dentaire, dans lequel la prothèse dentaire (6) est au moins temporairement mise en contact avec un dispositif de montage (1) selon l'une des revendications 1 à 9 dans un processus de revêtement.

13. Procédé selon la revendication 12, dans lequel le procédé de revêtement est un procédé d'émaillage.

14. Procédé selon l'une des revendications 12 à 13, dans lequel la prothèse dentaire est une prothèse choisie dans le groupe constitué par les couronnes, les bridges, les bridges multi-unités ou les combinaisons de ceux-ci.
